# EUROPEAN PATENT APPLICATION

(11) **EP 1 978 474 A1**
(43) Date of publication of application: **08.10.2008**
(21) Application number: 07251490.4
(22) Date of filing: 04.04.2007
(51) Int. Cl.: G06N 5/02, G06N 7/02

(54) **System & method**

(71) Applicant: British Telecommunications Public Limited Company, London EC1A 7AJ (GB)
(72) Inventor: The designation of the inventor has not yet been filed
(74) Representative: Wilson, Peter David

(57) **Abstract**

The present invention relates to a system and a method for automatically determining the relationship between a plurality of tasks comprising a process and then detecting any abnormalities in the execution of the process.

## Description

The present invention relates to a system and a method for monitoring a process, and in particular to a system and a method that can automatically identify and report abnormal process behaviour.

The design and management of processes is a key factor for companies to effectively compete in today's dynamic business environment. By focusing on optimising and continuously improving processes, organisations can establish a solid competitive advantage by reducing cost, improving quality and efficiency of their processes, and acquiring the ability to adapt to changing requirements. In order to achieve good performance levels, enterprises often expend huge amounts of money in analysing their processes. This is usually carried out by process consultants who examine the process logs and come up with conclusions about the current state of the process, and with recommendations for improvement.

Many commercial process management systems claim to have tools that can monitor and report on process behaviour. Typically, however, on closer inspection these tools are merely dashboards that convey performance indicators but leave the more important and complex task of finding out the reasons causing certain process behaviours to the process operators and owners. One of the aspects that current commercial process management systems lack is the ability to identify abnormal patterns in the activities of the monitored process instances, and to establish the causes of these behaviours.

Identifying abnormal patterns in the activities of the monitored process is very challenging because of the variety of factors, human and/or system related, that can affect the execution of process tasks. In particular, human behaviour in human-driven processes is very difficult to predict or model. It is a very complex task to formulate mappings between process activities and the status of the factors affecting them. Discovery of regular patterns, associations among task attributes, and long-term trends in Key performance indicators can be used to capture the status of the process.

The inventors are only aware of one system which has the ability to discover relationships from process data (see F. Casati et al, "Business Process Intelligence", 2002). This system uses commercial data mining tools to analyse process logs and then uses this data to classify the process instances. The main disadvantage with this approach is that these classifiers are static in nature and require major retraining even when there are small changes in the process and or in the resources used to execute the process.

According to a first aspect of the present invention there is provided a method of monitoring a process, the method comprising the steps of: a) receiving a first process data set from one or more process logs, wherein the first process data set comprises a first plurality of data objects and each of the first plurality of data objects is associated one of a plurality of attributes; b) identifying associations between each of the plurality of data attributes and one or more of the further data attributes to form an association network; c) receiving a second process data set from one or more process logs, wherein the second process data set comprises a second plurality of data objects; and d) comparing the second plurality of data objects with the association network.

The association network may be updated in accordance with the results of the comparison made in step d). An alert may be generated in accordance with the results of the comparison made in step d).

The method may comprise the further step of: e) the first process data set is transformed such that and each of the first plurality of data objects is represented by a fuzzy logic function; wherein step e) is carried out after step a) but before step b).

Alternatively, the method may comprise the further step of: f) the first process data set is transformed such that a further plurality of the plurality of data objects are replaced by one or more composite data objects, wherein each composite data objects is generated by combining one ore more of the plurality of data objects; wherein step f) is carried out after step a) but before step b). The method may further comprise the further step of g) creating one or more composite fuzzy logic functions, the or each composite fuzzy logic functions comprising one ore more fuzzy logic functions, wherein step g) is carried out after step b) but before step c).

According to a second aspect of the present invention there is provided a computer program product, comprising computer executable code for performing a method as described above.

According to a third aspect of the present invention there is provided a system comprising: a learning component configured to receive process data from one or more process logs, a detection component and an association network wherein, in use, the system such that: the learning component receives a first process data set from the one or more process logs, wherein the first process data set comprises a first plurality of data objects and each of the first plurality of data objects is associated one of a plurality of attributes; the learning component identifies associations between each of the plurality of data attributes and one or more of the further data attributes to form the association network; the detection component receives a second process data set from one or more process logs, wherein the second process data set comprises a second plurality of data objects; and detection component compares the second plurality of data objects with the association network.

The invention will be described with reference to the following Figures, which are provided by way of explanation only, in which:
Figure 1 shows a schematic depiction of a system according to the present invention;
Figure 2 shows a depiction of a flowchart describing the behaviour of a learning component in a system according to the present invention;
Figure 3 shows a schematic depiction of an association network;
Figure 4 shows a schematic depiction of a flowchart describing the behaviour of a detection component in a system according to the present invention; and
Figure 5 shows a schematic depiction of a process

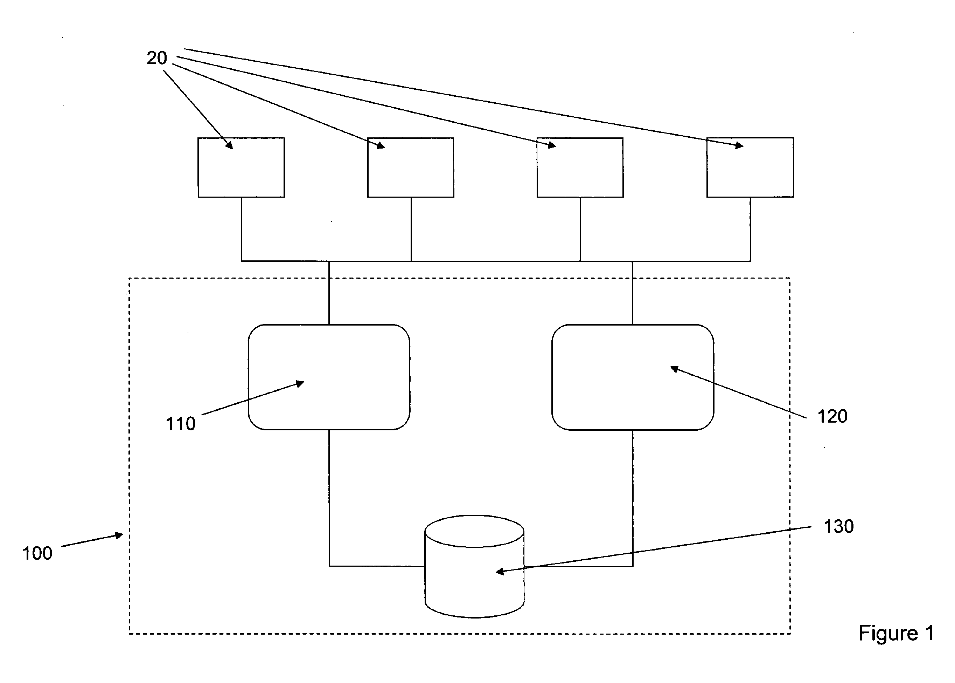

Figure 1 shows a schematic depiction of a system 100 according to the present invention. The system 100 comprises a learning component 110, a detection component 120 and an association network 130. Both of the learning component 110 and the detection component 120 receive data from a plurality of process logs 20. The learning component uses this received process log data to define the association network 130 and the detection node can then use subsequent process log data to determine if there is a process abnormality and/or to update the association network definitions.

The process logs numerical data relating to each instance of the process to which they are related and contain the execution attributes of each process task within each instance. These attributes are usually set, for example at the process design time by the owner of the process, however the system allows 'on the fly' definition of new attributes or the deletion of attributes that are no longer relevant. For example, the process logs may record the amount of time taken to perform a process, or a task that forms a part of a process, (sometimes referred to as execution data) or a parameter value related to the process (server loading, network load, message flow rate, etc.), sometimes referred to as environmental data.

The learning component 110 learns a normal pattern of the process execution activities based on historical process log data and converts it into an association network structure that links the tasks, their attributes, and the surrounding influences. Each task that is a part of a process has a number of attributes that can be measured and recorded numerically in a process log 20. Examples of these attributes include the duration, cost, customer satisfaction ...etc. In addition, there are other surrounding factors that may be recorded such as the resource executing the process, load level (on a server for example) and other factors that can have an effect on the process execution. The learning component examines the existing process execution logs where each process instance is recorded. The log contains the execution attributes of each process task within each instance. The learning component learns a normal pattern of the process execution activities, based on the data held in the process log, in the form of an association network structure that links the tasks, their attributes, and the surrounding influences. The association network will thus be a compact description of the normal behaviour of the process.

The formation of the association network is based on the technique disclosed by R Agrawal et al, "Fast discovery of association rules", Advances in Knowledge and Discovery and Data Mining. AAAI/MIT Press, Cambridge, MA, 1995, which is commonly used to perform market basket analysis (i.e. in determining a normal pattern of customer shopping patterns). The method of forming the association network in a method according to the present invention is an extension of the association rules technique disclosed by Agrawal *et al .* It is an analytical method that allows associations to be discovered in a much more complex system by breaking the system into attribute groups and then analysing the relationships between these attribute groups. In this way it allows a more focused rule discovery. The network can be stored in data base in a similar way to a tree structure.

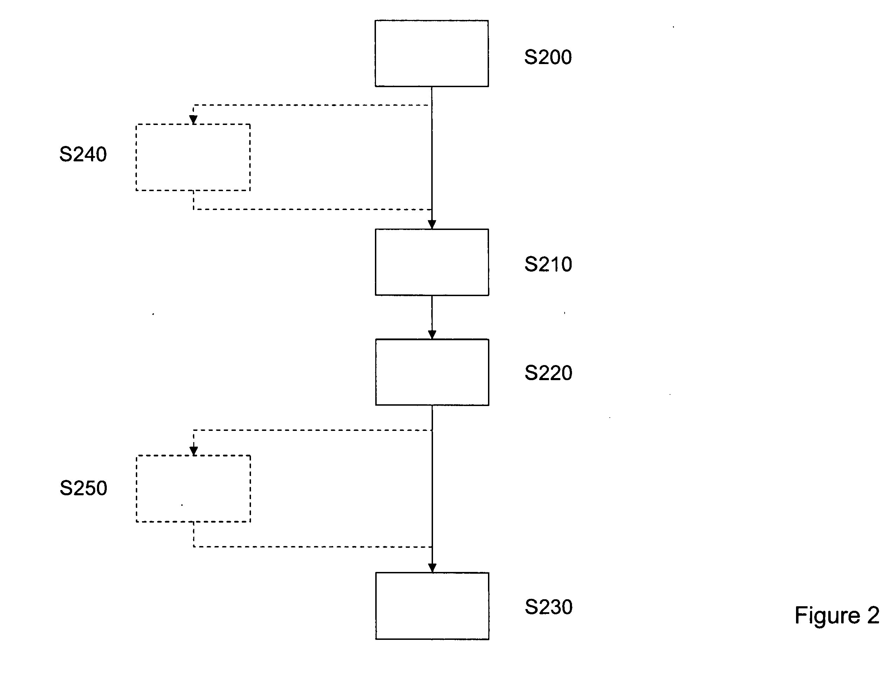

Figure 2 shows a depiction of a flowchart describing the behaviour of a learning component in a system according to the present invention. Referring to Figure 2, the behaviour component at step S200 first receives the historical process log data, which comprises numerical task attribute values, that will be used to determine the association network. At step S210, the numerical task attribute values received from the process log are subjected to a 'fuzzification' process. This fuzzification converts the numerical values of the attributes into fuzzy categories using membership functions that are either set by a user (using a fuzzy membership editing tool {for example the fuzzy editing tool disclosed in SPIDA [DD Nauck et al, "SPIDA - A Novel Data Analysis Tool Authors", BT Technology Journal, Volume 21, Number 4, October 2003, pp. 104-112]}), or can be learnt automatically using a fuzzy membership derivation technique. One possible technique is to run a one-dimensional fuzzy cluster analysis on each attribute in order to determine a suitable number of clusters representing fuzzy sets. Each cluster would then be approximated by a standard triangular or trapezoidal membership function which leads to complete fuzzy partitions for each attribute. Other possibilities will be immediately apparent to a person skilled in the art.

The fuzzified attributes and any categorical attributes are then passed to the association network building algorithm which, at step S230 (see below), calculates the associations between the different nodes and builds the network.

Figure 1 shows two further optional steps that may be included in a method according to the present invention. Rather than using a number of different data parameters to build the association network it is possible to construct one or more composite attributes, the value of which is obtained by combining appropriately weighted values from individual attributes. This process could be performed at step S240, before the fuzzification by combining numerical values of other attributes, or alternatively at step 250, at the fuzzy level by combining the fuzzy values of the basic attributes using fuzzy rules.

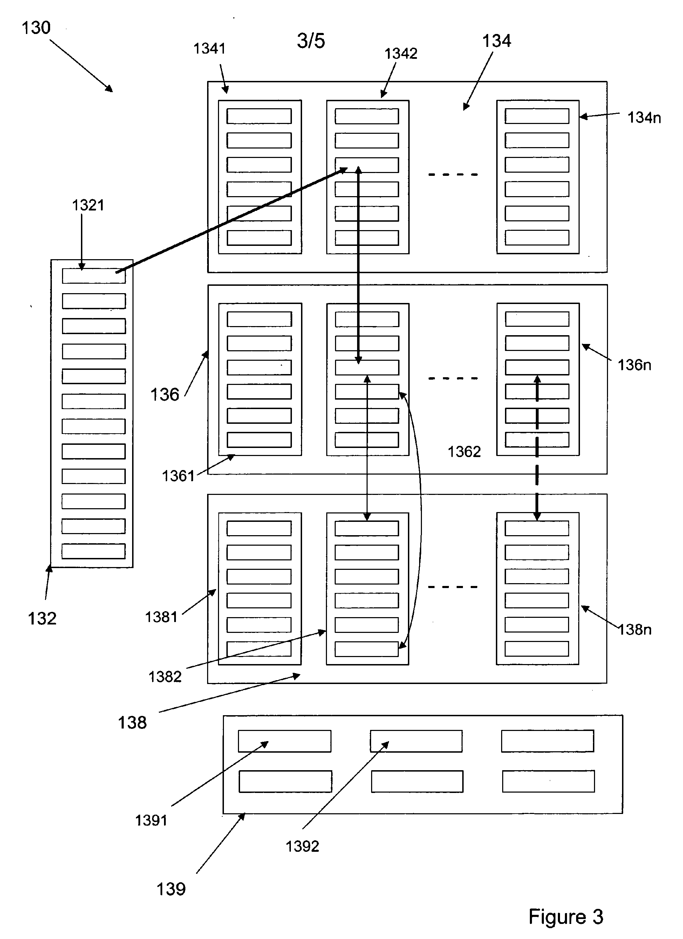

The structure of the association network 130 reflects structure of the input data. Figure 3 shows a schematic depiction of an association network structure 130. The structure of the association network comprises a plurality of layer groups (134, 136 & 138): it will be understood that the number of layer groups will vary with the data structure obtained from the process and that the association network may comprise fewer than or more than the three layer groups shown in Figure 3. For the example shown in Figure 3, group 134 is a duration attribute group, group 136 is a cost attribute group and group 138 is a satisfaction attribute group. These layer groups represent the fuzzified data received from the process log.

Each of the layer groups comprises a plurality of nodes (1341, 1342, 1361, 1362, 1381, 1382, ..., etc) such that the number of nodes in each layer group is equal to the number of fuzzy sets discovered for the task/attribute combination during the learning stage (see above). In the network shown in Figure 3 each of the layer groups 134, 136 & 138 comprise n nodes. Each of the n nodes in the layer groups are represented as singleton fuzzy memberships, where the weight of the membership function indicates the significance of the node. For example, in a case where two or more resources contribute to the execution of a single task, weights can be assigned to each resource in proportion to their assigned part of task. The sum of all the weights for a single task must add up to unity. Figure 3 shows the different attribute values by a number different attribute values (for example, very low cost, low cost, medium cost, high cost, very high cost, ...).

The association network further comprise a resource layer group 132, which is a categorical group, that indicates the resources (1321, 1322, ..., 132n) that are working on the process tasks.

Furthermore, the association network may comprise a group 139 representing a group of composite attributes (1391, 1392, ...,) that may have been formed from a number of task attributes and/or external factors.

Connections between different layers indicate connections that are detected during the learning process. The weights on the interconnections among the layers convey the likelihood of the connection that was determined during the learning process. Interconnections may be formed between nodes of different, but not among the nodes of the layers in the same layer group. These interconnections hold the weight values which indicates the strength of associations among nodes.

Figure 3 shows two examples of these interconnections, where a first interconnection is shown by the solid arrowed lines connecting a number of different groups and a second interconnection is shown by the dashed arrowed line. The first interconnection represents a strong association between Resource 1 (1321), the duration attribute of Task 2 (1342), the cost attribute of Task 2 (1362) and the satisfaction attribute of Task 2 (1382). The arrows of the interconnection indicate that there is a very strong association between the resource, duration and cost attributes, whereas the satisfaction attribute is split between "very satisfied" and "very unsatisfied". By way of contrast, the second interconnection shows that for Task n there is a strong association with a very high satisfaction attribute with no association with any of the resources; i.e. the customer satisfaction does not depend upon the availability and/or quality of the resources. This information is useful in flagging future reduced satisfaction, which may be due to new factors such as a new resource or some other external condition that previously had no influence on the process.

The method by which the weightings associated with the second interconnection will now be described. Initially all the weights, including that of the second interconnection, are set to zero. Then, for each process execution, the attributes are fuzzified using the established fuzzy membership functions. The weight of the connection for each particular execution is calculated by multiplying the two fuzzy membership values for the cost attribute and the satisfaction attribute of Task n. When the weights of all the execution instances (which have been retrieved from the process logs) are calculated, the global weight for each discovered connection can be calculated using an exponentially weighted moving average scheme (this is used to reduce the sensitivity to a one-off, large change in the weight of one of the instances). The association network now describes the dominant behaviour of the process as a table containing all the interconnections and their exponentially-weighted, moving averaged weights.

The above discussion relating to the formation of an association network is relevant to a process that has a single execution path (i.e. contains similar set of tasks which are executed with different attributes). However, in an alternative embodiment of the present invention, a process comprising multiple paths can be analysed in order to form an association network. The learning component would establish a behavioural description network for each possible path of execution, as long as there are sufficient samples of each possible path in order to establish a meaningful pattern of behavioural for all the paths. Paths which do not have enough samples to establish a significant model should be excluded from the analysis.

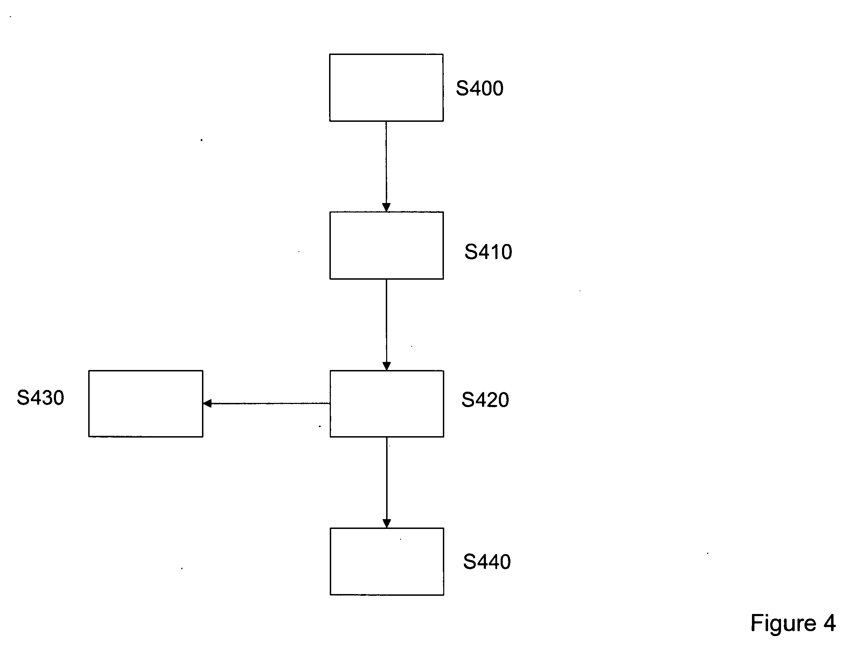

The generated association network can then be used to detect any abnormal behaviour in the task execution for new process instances. Referring to Figure 4, which shows a schematic depiction of a flowchart describing the behaviour of a detection component in a system according to the present invention, once a new instance of the process is activated task data is received by the detection component from the process logs at step S400. At step S410 the process log data is fuzzified and then at step S420 the detection component can compare the task behaviour with the patterns of the association network to determine whether the new data follows the patterns that were previously discovered.

The detection component produces comparison results on two levels: at a global level and at an interconnection level.

The global comparison level looks for overall variation between the new process instance and the learned network by comparing all connections and finding evidence of significant difference, for example, by using a chi-squared test. This global comparison level is useful for providing a general idea of whether the overall process is behaving according to the learned model or whether there is a significant deviation from the model.

The second level of comparison is interconnection based. Here the value of each interconnection in the new process instance can be compared with its counterpart in the learnt association model, and if any of these show significant difference then at step S430 this will be reported as an abnormality that is affecting that particular interconnection. A report may also be generated in case the new task data deviates substantially from the previously discovered patterns. The report can be generated immediately, and then sent to an appropriate operator, as the data about any task becomes available and there is no need to wait until the process instance has finished.

Users of the invention can use the two levels in a number of ways but generally a process owner will monitor the global reporting facility to see if overall the process is running smoothly according to what is expected. They can use the interconnection-specific facility to drill down and find out the details of why things are going wrong, or indeed why things are improving in the context of the process execution. For example some instances of the process might use different resources or partners to carry out certain tasks and this way a clear picture will emerge of the best possible execution scenario.

A major advantage of using fuzzy sets for describing attributes is that small deviations are not reported as abnormal patterns, thus reducing the number of false positives and subsequently reducing the cost of running a system according to the present invention. It is possible that the attributes of each task could be defined using crisp logic (i.e. not fuzzy membership functions) in which case the weights of all connections will simply be determined by the number of occurrences of that Interconnection. Such a non-fuzzy implementation of a system according to the present invention would result in a very sensitive system that would be likely to report a large number of unnecessary alarms.

Whether the new process instance contain abnormal task associations or not, the weights on the network interconnections can updated with this new data at step S440, in order for the network to reflect the latest state of execution. A number of policies can be applied to include the effect of the new data on the weight of the interconnections. It has been found that the most useful approach is an exponentially weighted approach, as this results in the increased importance of the newest process instances compared to older ones, but at the same time safeguards the updates of the interconnection against one-off instances of unusual process executions. It should be noted that one-off abnormal behaviour will still be reported, but its effect on the learning process will not be very significant due to the filtering effect of the weighted average calculation.

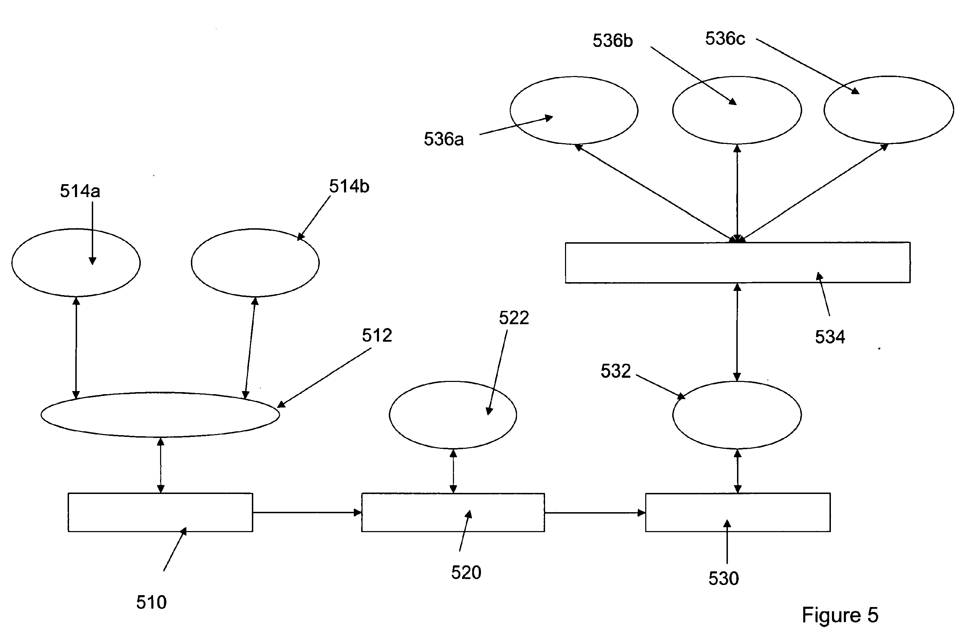

Figure 5 shows a schematic depiction of a process comprising three tasks 510, 520 & 530. Task_1 510 is executed by a call to a web service, and this service may be provided by one of two possible providers 514a, 514b. The choice between the two service providers is based on the decision logic in a selection policy 512. Initially, the selection policy could be based on passing alternate requests to the two providers or any other decision function set by a process administrator.

Task_2 520 may be executed by a human operator 522 who receives the task through a web portal or an email. It may be assumed that there is only one human operator for this task.

Task_3 530 is executed by sending a JMS (Java Messaging Service) request 532 to an ESB (Enterprise Service Bus) 534. The ESB 534 puts the request on a JMS Topic that is subscribed to by three applications 536a, 536b, 536 c, each of which is capable of providing the functionality required to execute Task_3. The ESB comprises a mechanism for deciding which of the applications a particular task should be assigned to.

As the process instances are executed, the task attributes will be recorded in one or more process logs. For each task there will be a Cost and Duration attribute, and there are also composite cost & duration attributes, which is formed by the summation of the individual task costs and durations respectively.

The learning component will process the process log data as discussed above and the result of this is a network of associations to show the dominant (and possibly other significant) rules that link the different combinations of the resources and attributes. Within the context of Figure 3, the Resources group of the association network will contain the two web services 514a, 514b, the human actor 522, and the three applications 536a, 536b, 536c connected to the ESB. The association network will also comprise a Cost attribute group and a Duration attribute group. In addition, there are also two composite attributes, the total cost and total duration. For example, a rule could indicate that Task_1 is always executed with a short duration and high cost if service provider 514a was responsible for the execution, while another rule can indicate that when Application 536a is used to execute Task_3, the associated duration is long. The composite attribute rule can be useful, for example, to learn that the composite cost of the process is primarily dominated by the Web service cost, and that the composite duration is mainly composed of the duration of the Task_2 (i.e. the human actor task takes a long time when compared to the automated tasks).

Through the actions of the detection component, these associations can be continuously updated to reflect any changes in the dominant behaviour of the process. The update of the weights is normally carried out using a weighted average algorithm in order to smooth out any short-lived abnormalities. For example, if the duration of execution by service provider 514a is too long for one instance, for example due to a temporary problem with the web service, then this should not unduly affect all the other "short-duration" execution instances by the same web service. However, such a behaviour will be picked up by the detection component of the system and highlighted to the process owner, who can then take any corrective action as necessary.

The above discussion of the present invention has focussed on processes associated with information communications technology but it will be readily apparent to the person skilled in the art that the present invention may be utilised with any process, for example a manufacturing process, chemical process, production process, etc.

It will be understood that the present invention may be implemented on a conventional computing device, such as a personal computer or similar, or an interconnected array of such computing devices. In such a case, the invention will be implemented using computer executable code that may be supplied on physical media (such as a USB drive, CD-ROM, DVD, etc) or supplied or made available for transfer or download via a communications network.

The invention may be implemented by running computer executable code on a computer that is accessible via a communications network such that process log data is transferred to a network accessible computer from a client computer, such that the network accessible computer generates and returns to the client computer one or more of: an association network, updates to an association network or alerts regarding a process trend or abnormality.

## Claims

1. A method of monitoring a process, the method comprising the steps of:
a) receiving a first process data set from one or more process logs, wherein the first process data set comprises a first plurality of data objects and each of the first plurality of data objects is associated one of a plurality of attributes;
b) identifying associations between each of the plurality of data attributes and one or more of the further data attributes to form an association network;
c) receiving a second process data set from one or more process logs, wherein the second process data set comprises a second plurality of data objects; and
d) comparing the second plurality of data objects with the association network.

2. A method according to Claim 1, in which the association network is updated in accordance with the results of the comparison made in step d).

3. A method according to Claim 1 or Claim 2, comprising the further step of:
e) the first process data set is transformed such that and each of the first plurality of data objects is represented by a fuzzy logic function;
wherein step e) is carried out after step a) but before step b).

4. A method according to Claim 1 or Claim 2, comprising the further step of:
f) the first process data set is transformed such that a further plurality of the plurality of data objects are replaced by one or more composite data objects, wherein each composite data objects is generated by combining one ore more of the plurality of data objects;
wherein step f) is carried out after step a) but before step b).

5. A method according to Claim 3, comprising the further step of
g) creating one or more composite fuzzy logic functions, the or each composite fuzzy logic functions comprising one ore more fuzzy logic functions, wherein step g) is carried out after step b) but before step c).

6. A method according to any preceding claim, wherein an alert is generated in accordance with the results of the comparison made in step d).

7. A computer program product, comprising computer executable code for performing a method according to any of Claims 1 to 6.

8. A system comprising:
a learning component configured to receive process data from one or more process logs, a detection component and an association network wherein, in use, the system such that:
the learning component receives a first process data set from the one or more process logs, wherein the first process data set comprises a first plurality of data objects and each of the first plurality of data objects is associated one of a plurality of attributes;
the learning component identifies associations between each of the plurality of data attributes and one or more of the further data attributes to form the association network;
the detection component receives a second process data set from one or more process logs, wherein the second process data set comprises a second plurality of data objects; and
detection component compares the second plurality of data objects with the association network.
